# EUROPÄISCHE PATENTSCHRIFT

(11) **EP 1 954 460 B1**
(45) Veröffentlichungstag und Bekanntmachung des Hinweises auf die Patenterteilung: **08.04.2009**
(21) Anmeldenummer: 06828508.9
(22) Anmeldetag: 04.11.2006
(51) Int. Cl.: B29B 15/12, D01G 1/08

(54) **VERFAHREN ZUR HERSTELLUNG EINES VERSTÄRKUNGSMATERIALS AUS STRANGFÖRMIGEN FILAMENTEN, DIE MIT THERMOPLAST GETRÄNKT UND UMHÜLLT WERDEN**
PROCESS FOR PRODUCING A REINFORCING MATERIAL FROM STRAND-SHAPED FILAMENTS WHICH ARE IMPREGNATED AND ENVELOPED WITH THERMOPLASTIC
PROCEDE DE FABRICATION D'UN MATERIAU DE RENFORT A PARTIR DE FILAMENTS EXTRUDES IMPREGNES ET ENDUITS D'UNE MATIERE THERMOPLASTIQUE

(30) Priorität: 02.12.2005 DE 102005057624; 13.01.2006 DE 102006001750
(43) Veröffentlichungstag der Anmeldung: 13.08.2008
(73) Patentinhaber: Wagener, Gert, 48282 Emsdettern (DE)
(72) Erfinder: Wagener, Gert, 48282 Emsdettern (DE)
(74) Vertreter: Habbel, Ludwig
(86) Internationale Anmeldenummer: PCT/DE2006/001935
(87) Internationale Veröffentlichungsnummer: WO 2007/062617

(56) Entgegenhaltungen:
- EP-A2- 0 395 036
- WO-A-02/06036
- WO-A-89/01999
- US-A1- 5 571 326
- US-A1- 2003 024 592

## Beschreibung

Die Erfindung betrifft ein Verfahren zur Herstellung von Verstärkungsmaterial aus strangförmigen Filamenten, die mit Thermoplast getränkt und umhüllt werden.

Seit vielen Jahren wird immer wieder versucht, Verstärkungsmaterial aus Armierungsfasern und Thermoplastmatrix herzustellen, wobei insbesondere der Einsatz von Kohlenstofffasern erhebliche Schwierigkeiten bereitet, da diese beispielsweise die Drapierfähigkeit des so hergestellten Verstärkungsmaterials stark einschränken.

In der DE 198 52 159 C1 wird ein Verfahren zur Faserimprägnierung und Herstellung faserverstärkter Hohlkörper mit thermoplastischer Matrix vorgeschlagen. Dabei hat das Verfahren zur Herstellung gewickelter Hohlkörper mit thermoplastischer Matrix die Aufgabe, im Wickelverfahren verarbeitbare textile Fadenhalbzeuge, wie Roving, Garn, Filament, Band, Gewebe usw. von einer Spule abzuziehen, in einer Ummantelungsdüse mit durch einen Aufschmelzextruder zugeführter thermoplastischer Schmelze zu imprägnieren und auf einen sich drehenden Formkern abzulegen. Dieses bekannte Verfahren besteht also nur darin, Verstärkungshalbzeug mit der thermoplastischen Matrix zu imprägnieren und auf einen rotierenden Formkern abzulegen.

Aus der EP-A-395 036 ist ein Verfahren bekannt, bei dem ein mit einem Polymer imprägniertes Tau derart verstreckt wird, dass die Verstärkungsfasern streckgebrochen werden. Hierzu wird das Tau in einer eine Zugspannung erzeugenden Zone ge- führt und das Polymer erhitzt, so dass dann die Verstärkungs- fasern streckgebrochen werden.

Der Erfindung liegt demgegenüber die Aufgabe zugrunde, ein Verstärkungsmaterial aus Armierungsfasern und Thermoplastmatrix zu schaffen, bei welcher die Armierungsfasern durch Streckbrechen die Eigenschaft gewonnen haben, auch in einem weiteren Verstreckungsverfahren verstreckt und verformt werden zu können, ohne die ursprüngliche Orientierung zu verlieren.

Diese Aufgabe wird durch ein Verfahren mit den Merkmalen der Patentansprüche 1 oder 2 gelöst.

Vorteilhafte Ausgestaltungen sind in den Unteransprüchen erläutert.

Im Nachfolgenden wird unter dem Begriff "Roving" parallel angeordnete Filamente, vorzugsweise Endlosfilamente verstanden.

Unter dem Begriff "Bändchen" wird eine relativ kleine Gruppe von Einzelfilamenten verstanden.

Unter dem Begriff "Dehnungsbrechverfahren" oder "Streckbrechverfahren" oder unter dem in der Praxis heute üblichen englischen Begriff "stretch-breaken" wird ein Verfahren verstanden, aus relativ groben Filamentrovings durch Zugbeanspruchung zwischen einen Klemmeffekt ausführenden Walzenpaaren, bei denen vorzugsweise das nächstfolgende stets mit höherer Umdrehungszahl läuft als das vorhergehende, die Endlosfilamente in Längen von z. B. 40 - 400 mm unregelmäßig zu brechen und zu einem Faserband mit wesentlich feinerem Endtiter zu verstrecken.

Im Nachfolgenden wird auch der Ausdruck "Organosheet" benutzt. Sogenanntes "Organosheet" besteht aus faserverstärktem Thermoplast. Es wird in einem kontinuierlichen Prozeß hergestellt. Im Einzugsbereich einer isobaren, beheizten Doppelbandpresse wird mit Hilfe einer Steuereinrichtung z. B. Thermoplastpulver oder Thermoplastfolie zwischen die Verstärkungslagen gebracht, aufgeheizt und zwischen die Filamente gepreßt.

Mit anderen Worten ausgedrückt schlägt die Erfindung vor, daß die zu einem Roving bzw. einem Bändchen zusammengefaßten Filamente in einer Schmelzspinn-Vorrichtung mit Thermoplast optimal imprägniert, also die Thermoplastmatrix erzielt wird, wobei die Schmelzspinn-Vorrichtung diese Matrix in Form einer Folie ausspinnt, die dann verstreckt wird, wobei der Thermoplastanteil verstreckt und der Armierungsanteil streckgebrochen wird. Die Folie kann dabei in schmale Streifen geschnitten werden, wobei diese Streifen beispielsweise eine Breite von 5 - 30 mm aufweisen können. Das eingesetzte Bändchen kann dabei schon streckgebrochen sein.

Gemäß der Erfindung wird also vorgeschlagen, daß das Dehnungsbrechverfahren und die Imprägnierung und die Verstreckung in einem Arbeitsgang durchgeführt werden, wodurch ein kostengünstiges Herstellungsverfahren geschaffen wird.

Die so hergestellten schmalen Streifen können in diversen Flächenbildungsverfahren eingesetzt werden, d. h. sie können verwebt, verwirkt, verflechtet werden oder es kann auch ein Gelege hergestellt werden.

Aus dem hergestellten sogenannten Flächengebilde kann dann ein "Organosheet" konsolidiert werden, z. B. durch Erwärmen bis zum Erweichungs- oder Schmelzpunkt der eingesetzten Thermoplastmatrix, wobei gleichzeitig oder nachfolgend ein Pressvorgang erfolgt, wobei dann anschließend das Organosheet später oder gleichzeitig zu dem gewünschten Fertigteil umgeformt werden kann.

Hierbei kann so vorgegangen werden, daß die aus den textilen Streifen gebildete textile Fläche, also das Organosheet, in einer oder mehreren Lagen in eine Preßform eingelegt, erwärmt und zum Fertigteil umgeformt wird.

Auch die gemäß dem erfindungsgemäßen Verfahren durch das Dehnungsbrechen erzielte Armierung mit der Thermoplastmatrix kann als Follie oder Streifen z. B. in einem Pultrusionsverfahren zu Profilen weiter verarbeitet werden.

Unter "Pultrusionsverfahren" wird ein Verfahren zum Strangziehen von faserverstärkten Kunststoffen verstanden, bei dem das mit Harz getränkte Verstärkungsmaterial kontinuierlich durch eine Düse mit dem gewünschten Profil gezogen wird, wobei es seine endgültige Form erhält und gleichzeitig aushärtet.

Als besonders geeignet für den Einsatz als Verstärkungsfaserelement kommen Carbonfasern zur Anwendung. Dies war bisher nur bedingt möglich, da aus Kostengründen dieses Material als Verstärkungsmaterial nur begrenzt eingesetzt werden konnte. Nun ist dabei zu berücksichtigen, daß z. B. zur Herstellung eines Bewehrungselementes als Ausgangsmaterial normalerweise ein 12K (ca. 800 tex) oder 24K (ca. 1.600 tex) (tex bedeutet: g/1000 m). Carbon-Roving eingesetzt werden würde. Der handelsübliche Preis für einen 12K oder 24K Roving liegt beispielsweise zur Zeit bei € 23,--/kg.

Geht man aber z. B. von einem Roving mit 80.000 Endlosfilamenten aus, einem sogenannten 80K Carbon-Roving, mit einem Einzeltiter von ca. 0,067 tex, insgesamt also 5.360 tex, so wird beim Dehnungsbrechverfahren mit einer Verstreckung um das 6- bis 7-fache ein Faserband von ca. 800 tex hergestellt (tex bedeutet: g/1000 m). Somit steht ein Carbonmaterial oder sonstiges Fasermaterial zur Verfügung, das nach der Konsolidierung mit einer Thermoplastmatrix die gewünschte Drapierfähigkeit aufweist. Das Ausgangsmaterial für das im vorstehenden Beispiel angegebene 80K Carbonmaterial liegt im Vergleich zu einem 12K oder 24K Roving dazu bei nur € 14,00/kg. Der Kostenvorteil liegt demnach bereits bei 40 %.

Gemäß der Erfindung ist darauf hinzuweisen, daß das Verstrecken kein Verstrecken der einzelnen Fasern darstellt, sondern ein aneinander Vorbeigleiten der auf ungleichmäßige Länge gebrochenen Filamente zum letztlich dem Grad der Verstreckung entsprechenden je Längeneinheit leichteren faserverstärktem Folienband. Die nach dem beschriebenen Verfahren gebrochenen Filamente stellen zwar keine Endlosfasern mehr dar, aber es kann auch keine meßbare Faserschädigung durch die Behandlung festgestellt werden. Hieraus resultieren im späteren Laminat lediglich erhöhte Dehnungswerte, so daß dadurch die Voraussetzung für den Einsatz des Verstärkungsmaterials geschaffen wird.

Im Voraufgehenden wurde von der Herstellung eines Verstärkungsmaterials im Allgemeinen gesprochen. Einsatzgebiet ist aber auch das Herstellen eines stabförmigen Bewehrungsmaterials für die Bauindustrie.

Dies bezieht sich sowohl auf die Herstellung eines einzelnen Stabes wie auch auf die Weiterverarbeitung eines solchen, eine Thermoplastmatrix aufweisenden faserverstärkten Elementes zu miteinander verschweißten Gitterflächen, wie sie für die Bauindustrie eingesetzt werden können. Hierbei können die Gitter in entsprechenden Fertigungsstätten hergestellt werden, wie dies z. B. auch bei den Bewehrungsgittern aus Stahl bekannt ist.

Diese Ausbildung des Bewehrungsmaterials hat aber weiterhin den Vorteil, daß auch ein leichtes Verschweißen der einzelnen Gitterstäbe zum Gitter möglich ist.

## Patentansprüche

1. Verfahren zur Herstellung eines Verstärkungsmaterials aus strangförmigen Filamenten, die mit Thermoplast getränkt und umhüllt werden, **dadurch gekennzeichnet, daß** die zu einem Roving zusammengefaßten Filamente in einer Schmelzspinn-Vorrichtung mit einer Thermoplast-Matrix optimal imprägniert und in Form einer Folie ausgesponnen und verstreckt werden, wobei der Thermoplastanteil verstreckt und der Armierungsanteil streckgebrochen wird.

2. Verfahren zur Herstellung eines Verstärkungsmaterials aus strangförmigen Filamenten, die mit Thermoplast getränkt und umhüllt werden, **dadurch gekennzeichnet, daß** die zu einem Bändchen zusammengefaßten Filamente in einer Schmelzspinnvorrichtung mt einer Thermoplastmatrix optimal imprägniert und in Form einer Folie ausgesponnen und verstreckt werden, wobei der Thermoplastanteil verstreckt und der Armierungsanteil streckgebrochen wird.

3. Verfahren nach Anspruch 2, **dadurch gekennzeichnet, daß** schon das Bändchen streckgebrochen wird.

4. Verfahren nach Anspruch 1 oder 2, **dadurch gekennzeichnet, daß** die Folie in schmale Streifen geschnitten wird.

5. Verfahren nach Anspruch 4, **dadurch gekennzeichnet, daß** die schmalen Streifen in verschiedenen Flächenbildungsverfahren eingesetzt werden, wie z. B. Weben, Wirken, Flechten und Herstellen von Gelegen.

6. Verfahren nach einem der vorhergehenden Ansprüche, **dadurch gekennzeichnet, daß** die Folie bzw. die textilen Flächen einzeln oder in mehreren Lagen durch Erwärmen entweder bis zum Erweichungs- oder bis zum Schmelzpunkt der eingesetzten Thermoplastmatrix und einem gleichzeitig oder nachfolgenden Pressvorgang zum sogenannten Organosheet konsolidiert und später thermisch umgeformt werden können.

7. Verfahren nach einem der vorhergehenden Ansprüche 1 bis 5, **dadurch gekennzeichnet, daß** die Folie oder die aus den Streifen gebildeten textilen Flächen in einer oder mehreren Lagen in eine Preßform eingelegt, erwärmt und zum Fertigteil umgeformt werden.

8. Verfahren nach einem der vorhergehenden Ansprüche 1 bis 5, **dadurch gekennzeichnet, daß** die Folie oder die Streifen im Pultrusionsverfahren zu Profilen verarbeitet werden.

9. Verfahren nach einem der vorhergehenden Ansprüche, **dadurch gekennzeichnet, daß** Filamente aus der Gruppe der Kohlenstofffasern, Glasfasern, Keramikfasern oder Aramidfasern od. dgl. eingesetzt werden.

10. Verfahren nach einem oder mehreren der vorhergehenden Ansprüche, **dadurch gekennzeichnet, daß** das Verstrecken kein Verstrecken der einzelnen Fasern darstellt, sondern ein aneinander Vorbeigleiten der auf ungleichmäßige Länge gebrochenen Filamente bedeutet zum letztlich dem Grad der Verstreckung entsprechendend leichteren Folienband.

11. Verschweißte Gitterflächen zur Baubewehrung aus dem stabförmigen Bewehrungsmaterial, hergestellt nach einem oder mehreren der vorhergehenden Verfahrensansprüche.

## Claims

1. Process for producing a reinforcing material from strand-shaped filaments which are impregnated and enveloped with thermoplastic, **characterised in that** the filaments combined to form a rove are optimally impregnated in a melt-spinning device to form a thermoplastic matrix by spinning and stretching it in the form of a film, thus stretching the thermoplastic component and in doing so breaking the reinforcing component.

2. Process for producing a reinforcing material from strand-shaped filaments which are impregnated and enveloped with thermoplastic, **characterised in that** the filaments combined to form a small ribbon are optimally impregnated in a melt-spinning device to form a thermoplastic matrix by spinning and stretching it in the form of a film, thus stretching the thermoplastic component and in doing so breaking the reinforcing component.

3. Process in accordance with claim 2, **characterised in that** the small ribbon itself is broken by stretching.

4. Process in accordance with claim 1 or 2, **characterised in that** the film is cut into narrow strips.

5. Process in accordance with claim 4, **characterised in that** the narrow strips are used in various surface-forming processes, such as weaving, knitting, braiding and the production of interlaid scrims.

6. Process in accordance with any of the foregoing claims, **characterised in that** the film or the textile surfaces can be consolidated individually or in a number of layers and later thermally re-formed into a so-called organo-sheet by heating either to the softening or melting point of the thermoplastic matrix used and a simultaneous or subsequent pressing operation.

7. Process in accordance with any of the foregoing claims 1 to 5, **characterised in that** the film or the textile surfaces formed from the strips can be laid in one or more layers in a compression mould, heated and re-formed to make a finished part.

8. Process in accordance with any of the foregoing claims 1 to 5, **characterised in that** the film or the strips are worked into profiles by a pultrusion process.

9. Process in accordance with any of the foregoing claims, **characterised in that** filaments from the carbon fibre, fibreglass, ceramic fibre or aramid fibre, etc., group are used.

10. Process in accordance with one or more of the foregoing claims, **characterised in that** stretching does not mean that the individual fibres are stretched but rather that the filaments which are broken to uneven lengths slide past one another to form a strip of film which is lighter per length unit and which ultimately corresponds to the degree of stretch.

11. Welded latticed surfaces manufactured from the rod-shaped reinforcing material in accordance with one or more of the foregoing process claims and used for reinforcement in the building industry.

## Revendications

1. Procédé de fabrication d'un matériau de renfort à partir de filaments extrudés imprégnés et enrobés d'une matière thermoplastique, **caractérisé en ce que** les filaments réunis en stratifil sont optimalement imprégnés d'une matrice thermoplastique dans un dispositif de fusion et filature et qu'ils sortent en forme de feuille ensuite étirée, la part de matière thermoplastique étant étirée, et la part d'armature étant étirée-cassée.

2. Procédé de fabrication d'un matériau de renfort à partir de filaments extrudés imprégnés et enrobés d'une matière thermoplastique, **caractérisé en ce que** les filaments réunis en un petit ruban sont optimalement imprégnés d'une matrice thermoplastique dans un dispositif de fusion et filature et qu'ils sortent en forme de feuille ensuite étirée, la part de matière thermoplastique étant étirée, et la part d'armature étant étirée-cassée.

3. Procédé selon la revendication 2, **caractérisé en ce que** l'on applique le processus d'étirage-cassure dès le stade du petit ruban.

4. Procédé selon la revendication 1 ou 2, **caractérisé en ce que** la feuille est découpée en bandes étroites.

5. Procédé selon la revendication 4, **caractérisé en ce que** les bandes étroites sont utilisées dans différents procédés générateurs de surfaces tels que p. ex. le tissage le tricotage, le tressage et la fabrication de couches composites.

6. Procédé selon l'une des revendications précédentes, **caractérisé en ce que** la feuille ou les surfaces textiles peuvent être consolidées individuellement ou en plusieurs couches par échauffement jusqu'au point soit de ramollissement, soit de fusion, de la matrice thermoplastique mise en oeuvre et par une séquence de pressage simultanée ou consécutive, pour former une feuille dite organique (organosheet) et pour pouvoir subir ensuite une déformation thermique.

7. Procédé selon l'une des revendications précédentes 1 à 5, **caractérisé en ce que** l'on dépose dans un moule à compression une ou plusieurs couches de la feuille ou des surfaces textiles formées à partir des bandes, qu'on les échauffe et déforme pour obtenir un produit fini.

8. Procédé selon l'une des revendications précédentes 1 à 5, **caractérisé en ce que** la feuille ou les bandes sont transformées en profilés au moyen du procédé de pultrusion.

9. Procédé selon l'une des revendications précédentes, **caractérisé en ce que** sont mis en oeuvre des filaments appartenant au groupe des fibres de carbone, fibres de verre, fibres céramiques ou fibres aramides ou assimilées.

10. Procédé selon l'une ou plusieurs des revendications précédentes, **caractérisé en ce que** l'étirage ne consiste pas en un étirage de chaque fibre, mais en un glissement, les uns le long des autres, des filaments cassés à des longueurs irrégulières, pour obtenir un ruban foliaire d'une légèreté dépendant du degré d'étirage.

11. Surfaces-treillis soudées destinées à armer la construction, composées de matériau d'armature en forme de barre, fabriquées selon l'une ou plusieurs des revendications précédentes sur les procédés.
